# EUROPÄISCHE PATENTANMELDUNG

(11) **EP 2 208 714 A2**
(43) Veröffentlichungstag der Anmeldung: **21.07.2010**
(21) Anmeldenummer: 10150698.8
(22) Anmeldetag: 13.01.2010
(51) Int. Cl.: C03B 9/193

(54) **Hohlglasartikel-Fertigungsvorrichtung mit Abstromsteuerung**

(30) Priorität: 14.01.2009 DE 102009004961
(71) Anmelder: LAT Antriebstechnik-Vertriebs-GmbH & Co. KG, 48712 Gescher (DE)
(72) Erfinder: Lütkenhaus, Paul, 48712 Gescher (DE); Bengfort, Tobias, 48691 Vreden (DE); Benke, Laszlo, 8152 Glattbrugg (CH)
(74) Vertreter: Habbel, Ludwig

(57) **Zusammenfassung**

Die Erfindung bezieht sich auf eine Hohlglasartikel-Fertigungsvorrichtung, welche aufweist: einen druckbeaufschlagbaren Hubzylinder, einen im Hubzylinder beweglichen Kolben, einen funktional mit dem Kolben verbundenen, den Glasartikel kontaktierend formenden Pegel, sowie je eine an den Hubzylinder anschließende Zustrom- und Abstromleitung für ein den Kolben beaufschlagendes Betriebsmedium, wobei der Kolben abwechselnd einen Glasformhub und einen Rückhub ausführend beweglich ist, mit einem während des Glasformhubs mediumführend mit der Abstromleitung verbundenes Stellglied, welches die Durchströmbarkeit der Abstromleitung je nach seiner Stellung unterschiedlich beeinflusst, sowie durch eine programmierbare Steuerungseinheit, welche das Stellglied ansteuert, sowie ein Verfahren zur Hohlglasherstellung mit einer Abstromsteuerung.

## Beschreibung

Die Erfindung betrifft eine Fertigungsvorrichtung für die Hohlglasartikelherstellung und ein Verfahren zur Hohlglasherstellung.

Ein Verfahren und eine Vorrichtung zum Verformen eines Glaspostens ist bereits aus der WO 88/02353 bekannt, die einen hydraulisch vortreibbaren Pegel beschreibt, der innerhalb eines Zylinders geführt ist und dessen Pegelspitze die Verformung eines Glaspostens bewirkt, der aufgrund seiner Bearbeitungstemperatur noch verformbar ist.

Bei entsprechenden Glasverformungsvorrichtungen ist es bekannt, dass der unteren Zylinderkammer ein Regelventil beigeordnet ist, mit dem die auf- und abwärts gerichtete Bewegung des Kolbens mit daran befestigter Kolbenstange und Pegelspitze geregelt wird. Das heißt, durch Erhöhung bzw. Erniedrigung des Druckes in der unteren Zylinderkammer wird die Bewegung des Kolbens mitsamt Kolbenstange und Pegelspitze gesteuert über eine Steuerungseinheit, die zum Einen den Druck der unteren Zylinderkammer erfasst und regelt und zudem mit einem Wegmesssystem verbunden ist, welches die Bewegung des Kolbens erfasst. Hierbei wird - wie bei derartigen Vorrichtungen praxisüblich - der Zustrom in die untere Zylinderkammer über ein Ventil geregelt.

Mit einer praxisüblichen Zustromsteuerung ist es jedoch nur bedingt möglich, gehobene Ansprüche hinsichtlich einer hohen Fertigungsgenauigkeit oder einer hohen Wiederholgenauigkeit besonders bei der Herstellung dünnwandiger Hohlglasartikel zu erzielen. Häufig sind die noch verformbaren Glasrohlinge, welche in eine Vorrichtungsform eingebracht werden unterschiedlich groß oder weisen von Rohling zu Rohling schwankende Rohlingsmassen oder Temperaturen auf. Gerade hinsichtlich einer schnell abfallenden Rohlingstemperatur, welche eine schlechtere Verformbarkeit des Glases bedingen kann, ist es wichtig, eine präzise Steuerung der glasformenden Vorrichtungsbewegungen zu gewährleisten. So kann ein immer gleicher Bewegungsablauf und immer gleiche angefahrene Hubpositionen bei schwankenden Rohlingsbedingungen zu ebenso stark schwankenden Glasproduktqualitäten und zu hohen Ausschusszahlen führen, was eine unwirtschaftlichen Fertigung zur Folge haben kann.

Der Erfindung liegt die Aufgabe zugrunde, eine Fertigungsmöglichkeit bereitzustellen, mit welcher unter Vermeidung der aus dem Stand der Technik bekannten Nachteile eine hohe Fertigungsgenauigkeit bei einer gleichzeitig wirtschaftlicheren Herstellung von Hohlglasartikeln erreichbar ist.

Diese Aufgabe wird gelöst durch eine Vorrichtung mit den Merkmalen des Anspruches 1 sowie durch ein Verfahren nach Anspruch 9.

Die Erfindung schlägt mit anderen Worten vor, dass in einem - vorteilhaft pneumatischen ausgeführtem - System der Zylinderkammer oberhalb des Kolbens ein zweites Regelungsventil beigeordnet ist, das wiederum die Druckverhältnisse in der oberen Zylinderkammer erfasst und über einen geschlossenen Regelkreis kann der Druck in der oberen Zylinderkammer erhöht bzw. verringert werden. Durch die Verwendung von zwei geschlossenen Regelkreisen für die obere Zylinderkammer oberhalb des Kolbens und für die untere Zylinderkammer und durch entsprechende Ansteuerung von mindestens einem Druckventil für die obere Zylinderkammer und mindestens einem Druckventil für die untere Zylinderkammer kann eine sehr exakte Betätigung des Kolbens mit daran befestigter Kolbenstange und daran angeordneter Pegelspitze erfolgen, wobei die Bewegung des Kolbens und/oder der Kolbenstange zusätzlich über ein Wegmesssystem erfasst wird und einer elektronischen Steuerungseinheit zugeführt wird, die wiederum mit dem geschlossenen Regelkreis des Ventils der oberen Zylinderkammer und des Ventils der unteren Zylinderkammer verbunden bzw. Teil des geschlossenen Regelkreises ist.

Die präzise Ansteuerung jeweils eines im Abstrom und eines im Zustrom liegenden Stellgliedes ermöglicht - je nach Rohteilbedingtem Bedarf - eine sanfte und gedämpfte, oder aber eine ruckartig schnelle Hubbewegung, wobei jedes Stellglied ein oder mehrere Ventile und zusätzliche, die Steuerung eines Ventils beeinflussenden Bauteile aufweisen kann.

Werden in diesem Zusammenhang die Begriffe "oben" und "unten" verwendet, so ist hierbei die Rede von einer aufrechten Anordnung des Zylinders, welche für eine derartige Fertigungsvorrichtung besonders vorteilhaft ist, da der temperaturbedingt noch verformbare Glasrohling von oben auf den Pegel herabfallen kann und welcher sich somit im Verformungsraum befindet, welcher nach oben von einer Gegenform in Art eines Deckels abgeschlossen wird, gegen welchen der Pegel druckbeaufschlagt bewegt wird und wobei durch diese Bewegung die Glasverformung ausgeübt wird. "Oben" bedeutet daher in diesem Fall abstromseitig, während "unten" dementsprechend zustromseitig bedeutet. Nach Erreichen einer maximalen oberen Pegelposition führt der Kolben, an welchem die Pegelspitze befestigt ist, eine Rückhubbewegung aus, durch welche die Pegelspitze in eine Ladeposition verbracht wird, in der sie verweilt, bis ein neuer Glasrohling zur Verformung in die Vorrichtung eingebracht wird und der Glasformprozess erneut beginnen kann.

Wird in diesem Zusammenhang von einem Ventil gesprochen, so sind einerseits die aus der Hydraulik oder Pneumatik bekannten Wegeventile gemeint oder aber eine als Ventil bezeichnete Baugruppe, welche wenigstens ein solches Hydraulik- oder Pneumatikventil aufweist sowie beispielsweise einen Drucksensor, einen Strom-Spannungswandler oder andere ventilsteuernde Einheiten.

In besonders vorteilhafter Ausgestaltung können die als Stellglieder verwendeten Ventile ein Proportionalventil aufweisen, welches neben zwei absoluten Schaltstellungen jede beliebige Zwischenstellung erlaubt, wodurch es ermöglicht ist, das durchströmende Betriebsmedium unter optimierten Strömungsbedingungen durchzulassen. Es kann wirtschaftlich vorteilig vorgesehen sein, alle druckbeaufschlagten Bauteile in einem gemeinsamen Druckluftnetz zu betreiben, da sich jedes Ventil separat ansteuern lässt und eine jeweils eigene Druckregulierung ermöglicht. Auf diese Weise kann sowohl eine Zustromsteuerung sowie auch eine Abstromsteuerung geschaltet und gesteuert werden, wobei ein Proportionalwegeventil einen stetigen Übergang zwischen den Schaltstellungen ermöglicht und somit einen kontrolliert regulierbaren Mediumsdurchstrom durch das Ventil ermöglicht.

Über eine Wegmesseinheit, welche mit der Steuerungseinheit verbunden ist, ist es ermöglicht, die Positionen des Kolbens und somit einer an diesem festgelegten Kolbenstange und wiederum daran festgelegter Pegelspitze zu überwachen und über die Steuerungseinheit zu kontrollieren. Die programmierte Steuerungseinheit ermöglicht das Anfahren bestimmter Positionen der Pegelspitze, wie beispielsweise eine als Ladeposition bezeichnete Stellung, in welcher die Vorrichtung mit einem verformbaren Glasrohling bestückt werden kann oder auch eine Position, von welcher aus die Verformung des Glases eingeleitet wird sowie eine Maximalposition, in welcher die Ausformung des Glases abgeschlossen ist und von welcher aus der Rückhub eingeleitet wird. Über die Steuerung können ebenso der bei der Glasverformung herrschende Druck in den Zylinderkammern und/oder in den angeschlossenen mediumführenden Leitungen erfasst sein sowie die Verfahrgeschwindigkeiten des Kolbens gesteuert sein. Diese Art der Steuerung und diese Ausgestaltung der Vorrichtung ermöglichen eine besonders feinfühlige Ausführung des Glasformhubs, was besonders bei schwierig zu gestalteten Glasformen und bei sehr dünnen Wandstärken besonders vorteilhaft macht.

In besonders vorteilhafter Ausgestaltung ist die Wegmesseinheit zylinderintegriert, also innerhalb des Hubzylinders, angeordnet, d. h., die Wegmessung erfolgt innerhalb des Gehäuses des druckbeaufschlagbaren Hubzylinders. Durch diese Anordnung der Wegmesseinheit ist diese optimal vor Verschmutzungen geschützt, was eine hohe Lebensdauer der Messeinheit ermöglicht.

Eine bestehende Vorrichtung kann vorteilhaft mit einem solchen Zylinder mit integriertem Wegmesssystem nachgerüstet werden. In besonders vorteilhafter Ausgestaltung kann die Wegmesseinheit einen Wirbelstromsensor aufweisen und nach dem Wirbelstromprinzip arbeiten.

Durch eine ständige Drucküberwachung im mediumführenden System ist es über einen Presskurvenverlauf oder Glasformkurvenverlauf besonders vorteilhaft eine automatische Erkennung fehlerhaft gefertigter Artikel ermöglicht, wobei beispielsweise bei einem fehlerhaften Kurvenverlauf über die Steuerungseinheit eine Fehlermeldung an einen Bediener der Fertigungsvorrichtung gegeben werden kann oder ein automatischen Auswurf eines fehlerhaften Artikels bewirkt werden kann.

In vorteilhafter Ausgestaltung kann die Regelintervallzeit für den Glasformhub 1 ms betragen. Durch die Verwendung von mindestens einem Regelventil in der oberen und einem Regelventil in der unteren Zylinderkammer wird eine besonders präzise Bewegung des Kolbens und der daran angeordneten Pegelspitze erreicht, so dass eine größere Genauigkeit bei der Herstellung von Hohlglasartikeln durch die Pegelspitze erreicht wird bei gleichzeitig höherer möglicher Geschwindigkeit der Bewegung des Kolbens und dadurch einer erhöhten Produktivität der Anlage bei gleichzeitig geringerem Ausschuss - also nicht zu verwertender Hohlglasartikel.

Die Regelventile können in vorteilhafter Weise elektropneumatisch ausgebildet sein. Sie dienen der Geschwindigkeits-, Positions- und der Kraftregelung in einem geschlossenen Regelkreis des Pegelmechanismus (Abluftregelung). Die Regelventile sind aufgrund ihrer Bauart schmutz- und wasserunempfindlich. Die eingesetzte elektronische Steuerungseinheit (Masterelektronik) dient der Bedienung und Visualisierung bzw. der Prozesskontrolle für Glasrohlings-Gewichtsregelung und dem Auswurf fehlerhafter Artikel in der Vorform.

Die einzelnen programmierten Pegelparameter können während des automatischen Produktionsablaufs optimiert werden. Jeder Servopegelmechanismus ist individuell einzeln frei programmierbar. Die Pegel werden über den Gesamthub in geschlossenem Regelkreis mit sehr hoher Dynamik gefahren. Jede Position des Hubes kann vorprogrammiert werden und wird mit einer Reproduzierbarkeit von +/- 0,2 mm angefahren und gehalten.

Die Ausgangsposition (Grundposition) ist frei programmierbar über den Gesamthub. Jede Ladeposition ist frei programmierbar über den Gesamthub, ebenso die Startposition und die programmierte "Maximalposition", d. h. artikelbezogene Position als Sicherheitsabstand zum Vorformboden.

Zudem sind alle Hubgeschwindigkeiten, wie beispielsweise die Anfahrgeschwindigkeit zur Ladeposition, die Glasrohlingsverformungsgeschwindigkeit und die Rückhubgeschwindigkeit, über die Steuerungseinheit stufenlos in einem geschlossenen Geschwindigkeitsregelkreis programmierbar. Ebenso sind die "echten" Glaspostenverformungskräfte in einem geschlossenen Kraftregelkreis stufenlos für eine optimale Glasverformung individuell anpassbar, wodurch beispielsweise eine die Produktqualität beeinträchtigende Glasfaltenbildung oder ein Durchdringen des Pegels durch die gefertigte Glasartikel-Wandung effektiv vermieden werden kann.

Über die Steuerungseinheit ist es ebenso möglich, das Einblasen von Kühlluft in den Pegel zu ermöglichen, wodurch eventuell überhitzte Vorrichtungsbauteile gesteuert und überwacht heruntergekühlt werden können. Hierdurch kann die Fertigungsgenauigkeit deutlich erhöht und einem vorzeitigen Verschleiß der Formbauteile sowie einer Ausschussfertigung entgegengewirkt werden. Ein Herunterkühlen der Vorrichtungsbauteile, die den Glasrohling direkt bei dessen Umformung kontaktieren oder indirekt durch den Rohling aufgeheizt werden, kann jedoch ein Abkühlen des Glasrohlings selbst zur Folge haben. Da dessen Formbarkeit mit sinkender Temperatur abnehmen kann, müssen gegebenenfalls Glasformdruck und/oder Glasformgeschwindigkeit erhöht werden, um die Abkühlungseffekte wirkungsvoll zu kompensieren. Es wird in diesem Fall die Geschwindigkeit des Pegels erhöht, mit welcher dieser den Glasrohling verformt oder - ggf. zusätzlich dazu - auch der Druck mit dem dies geschieht. Die Steuerungseinheit ist in einer vorteilhaften Ausgestaltung dahingehend programmiert, dass die unterschiedlichen Druckverhältnisse, die beispielsweise in der oberen und unteren Zylinderkammer oder im Leitungssystem detektiert werden, stetig überwacht werden, so dass anhand der daraus erhaltenen Drucksensoren-Werte eine erhöhte Kolbengeschwindigkeit für den Glasformhub oder ein druckverstärktes Anpressen des Pegels an den zu verformenden Glasrohling erzielt werden kann.

Die Art der Steuerung und Regelung erlaubt es, temperatur- oder verschleißbedingte Druckschwankungen innerhalb der Zylinderkammern oder im mediumführenden System auszugleichen. Dies ermöglicht während des gesamten Arbeitsdurchganges optimale Druckverhältnisse in der Anlage, was deren Arbeitsgenauigkeit durch die stabile Kraftübertragung auf den Pegel deutlich erhöht.

Ausführungsbeispiele werden anhand der rein schematischen Darstellungen näher erläutert. Dabei zeigen
- Fig. 1: einen Schaltplan einer Pegelsteuerung über Abluft und zusätzlich über Zuluft, und
- Fig. 2: eine Seitenansicht auf einen im Schnitt dargestellten Hubzylinder einer Hohlglasartikel-Fertigungsvorrichtung.

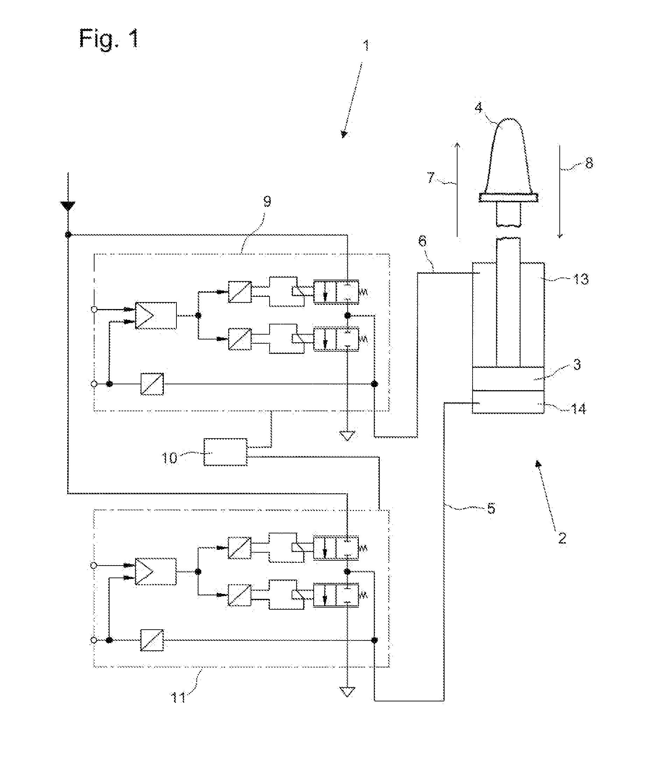

Fig. 1 zeigt einen Schaltplan, welcher in beispielhafter Anordnung die funktionell miteinander verbundenen Bauteile einer beispielhaft ausgestalteten und zu einer vorschlagsgemäßen Hohlglasartikel-Fertigungsvorrichtung 1 gehörenden pneumatischen Pegelsteuerung. Dieser zeigt einen druckbeaufschlagbaren Hubzylinder 2 mit einen im Hubzylinder 2 beweglichen Kolben 3. Funktional mit dem Kolben verbundenen ist ein einen Glasartikel ausformender Pegel mit seiner Pegelspitze 4. An den Hubzylinder 2 anschließend dargestellt sind je eine Zustromleitung 5 und eine Abstromleitung 6 für ein den Kolben 3 beaufschlagendes Betriebsmedium, welches in dieser bevorzugten Ausführungsform Druckluft ist. Der Kolben 3 führt einen Glasformhub aus, dessen Formrichtung 7 hier nach oben führt, von wo aus ein verformbarer Glasrohling schwerkraftbedingt auf die Pegelspitze 4 herabfällt. Ist das Glasstück fertig geformt, führt der Kolben 3 einen Rückhub aus, dessen Rückhubrichtung 8 hier nach unten führt.

Der Hubzylinder 2 weist in dieser beispielhaften Ausgestaltung eine hier nicht dargestellte Wegmesseinheit 12 auf, welche besonders vorteilhaft verschmutzungsgeschützt im Hubzylinder 2 integriert ist. Die Wegmesseinheit 12 ist mit der Steuerungseinheit 10 verbunden, derart, dass sie die jeweiligen vom Kolben 3 eingenommenen Positionen berührungslos über einen Wirbelstrom detektiert, was es ermöglicht, programmierte Bewegungsabläufe des Kolbens 3 über die Steuerungseinheit 10 zu steuern.

Der Schaltplan zeigt weiterhin ein während des Glasformhubs mediumführend mit der Abstromleitung 6 verbundenes Stellglied 9, welches die Durchströmbarkeit der Abstromleitung 6 je nach seiner Schaltstellung unterschiedlich beeinflusst, wobei die vielfältigen Schaltstellungen durch eine programmierbare Steuerungseinheit 10 bewirkt werden. Über diese Schaltungsvariante wird eine so genannte Abluftsteuerung realisiert.

Zusätzlich zu dem abstromseitigen Stellglied 9 ist in dieser bevorzugten Schaltungsvariante ein zustromseitiges Stellglied 11 vorgesehen. Es weist - ebenso wie das das abstromseitigen Stellglied 9 - zwei Proportional-Wegeventile, zwei Spannungs-Strom-Wandler und den Mediumsdruck in den Leitungen 5 und 6 überwachende Elemente auf. Beide Stellglieder sind steuerungswirksam mit der Steuerungseinheit 10 verbunden, welche derart programmierbar ist, dass sie aufgrund eines überwachten Soll-Druckes und der Verfahrwege einen optimierten Glasformvorgang des Kolbens 3 errechnet und ansteuert.

Beide Stellglieder 9 und 11 werden über ein einziges Druckluftnetz mit Betriebmedium versorgt.

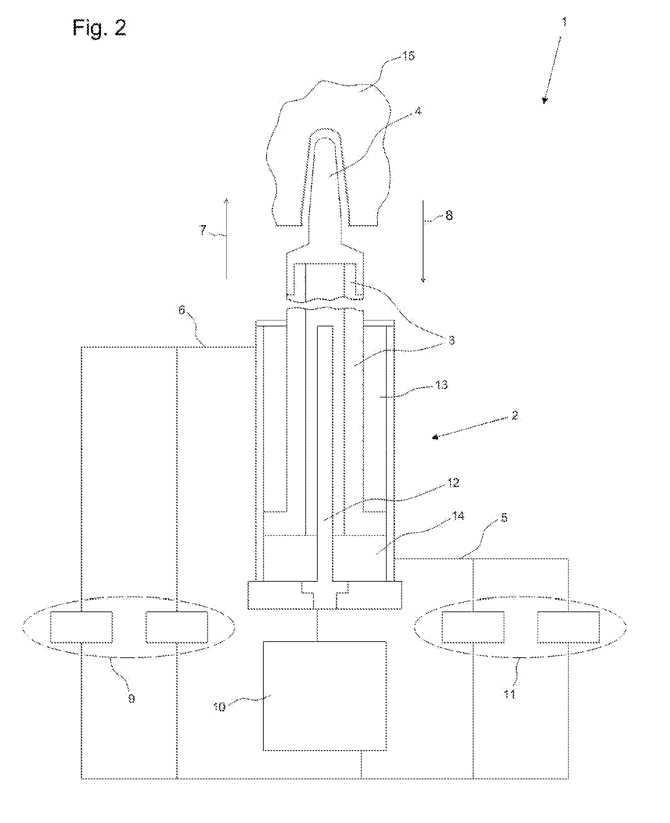

In Fig. 2 ist rein schematisch der Aufbau einer vorschlagsgemäßen Hohlglasartikel-Fertigungsvorrichtung 1 dargestellt. Er beinhaltet den im Hubzylinder 2 beweglich angeordneten Kolben 3, an welchem der Pegel mit seiner einen Glasrohling kontaktierend umformenden Pegelspitze 4 angeordnet ist. Der Kolben 3 drückt das zu verformende Glas in der Formrichtung 7 während des Glasformhubes mittels der Pegelspitze 4 in Richtung eines als Gegenlager wirkenden Formbodens 15. Ist die gewünschte Maximalposition des Kolbens 3 erreicht, wird dieser über die angeschlossene Steuerungseinheit 10 wieder in Rückhubrichtung 8 in eine Ladeposition verfahren, in welcher die Hohlglasartikel-Fertigungsvorrichtung 1 entladen und mit neuem Glasrohling beladen werden kann.

Das Anfahren der Maximalposition kann - wie auch das Anfahren aller anderen vom Kolben 3 einzunehmenden Positionen - vorteilhaft über die dahingehend programmierte Steuerung ausgeführt werden. Hierfür weist die hier dargestellte Hohlglasartikel-Fertigungsvorrichtung 1 in vorteilhafter Ausgestaltung eine im Hubzylinder 2 integrierte und nach dem Wirbelstromprinzip funktionierende Wegmesseinheit 12 auf.

## Patentansprüche

1. Hohlglasartikel-Fertigungsvorrichtung,
welche aufweist:
einen druckbeaufschlagbaren Hubzylinder,
einen im Hubzylinder beweglichen Kolben,
einen funktional mit dem Kolben verbundenen, den Glasartikel kontaktierend formenden Pegel,
sowie je eine an den Hubzylinder anschließende Zustrom- und Abstromleitung für ein den Kolben beaufschlagendes Betriebsmedium,
wobei der Kolben abwechselnd einen Glasformhub und einen Rückhub ausführend beweglich ist,
**gekennzeichnet durch**
ein während des Glasformhubs mediumführend mit der Abstromleitung (6) verbundenes Stellglied (9), welches die Durchströmbarkeit der Abstromleitung (6) je nach seiner Schaltstellung unterschiedlich beeinflusst,
sowie **durch** eine programmierbare Steuerungseinheit (10), welche das Stellglied (9) ansteuert.

2. Vorrichtung nach Anspruch 1,
**gekennzeichnet durch**
einen Drucksensor, welcher den abstromseitigen Mediumsdruck erfassend angeordnet ist, und
welcher steuerungswirksam mit der Steuerungseinheit (10) verbunden ist.

3. Vorrichtung nach Anspruch 1 oder 2,
**gekennzeichnet durch**
einen Drucksensor, welcher den abstromseitigen Mediumsdruck erfassend angeordnet ist, und
welcher steuerungswirksam mit der Steuerungseinheit (10) verbunden ist,
wobei die Steuerungseinheit (10) ein mit der Zustromleitung (5) verbundenes Stellglied (11) ansteuert, welches die Durchströmbarkeit der Zustromleitung (5) je nach seiner Schaltstellung unterschiedlich beeinflusst.

4. Vorrichtung nach einem der vorhergehenden Ansprüche,
**gekennzeichnet durch**
eine die Glasformhub-Bewegung erfassende Wegmesseinheit (12), welche steuerungswirksam mit der Steuerungseinheit (10) verbunden ist, derart, dass der Glasformhub wegbezogen und/oder positionsbezogen gesteuert ausführbar ist.

5. Vorrichtung nach Anspruch 4,
**dadurch gekennzeichnet,**
**dass** die Wegmesseinheit (12) einen Wirbelstromsensor für die Positionsbestimmung aufweist.

6. Vorrichtung nach Anspruch 4 oder 5,
**dadurch gekennzeichnet,**
**dass** die Wegmesseinheit (12) im Hubzylinder (2) integriert angeordnet ist.

7. Vorrichtung nach einem der vorhergehenden Ansprüche,
**dadurch gekennzeichnet,**
**dass** sie als eine Pneumatik-Vorrichtung ausgestaltet ist und das Betriebsmedium ein Gas ist.

8. Vorrichtung nach einem der vorhergehenden Ansprüche,
**dadurch gekennzeichnet,**
**dass** ein mit der Zustromleitung (5) verbundenes, das Betriebsmedium dem Hubzylinder (2) im Zustrom zuführendes Stellglied (11) vorgesehen ist, welches mit der Steuerungseinheit (10) steuerungswirksam verbunden ist und welches mit dem abstromseitig vorgesehenen Stellglied (9) in einem geschlossenen Regelkreis gesteuert betreibbar ist.

9. Verfahren zur Hohlglasherstellung mit einer Abstromsteuerung nach einem der vorhergehenden Ansprüche.

10. Verfahren nach Anspruch 9,
**dadurch gekennzeichnet,**
**dass** zur Kühlung der glasformenden Bauteile während des gesamten Glasformprozesses Kühlluft in die Vorrichtung (1) eingespeist wird, und
**dass** eine aus der Kühlluft-Einspeisung resultierende höhere Glasformkraft durch eine Erhöhung des Pegel-Anpressdruckes und/oder der Anpressgeschwindigkeit kompensiert wird, wobei
die Steuerung des Kompensations-Prozesses über die Steuerungseinheit (10) realisiert ist.
